# EUROPEAN PATENT APPLICATION

(11) **EP 2 506 489 A1**
(43) Date of publication of application: **03.10.2012**
(21) Application number: 09851650.3
(22) Date of filing: 26.11.2009
(51) Int. Cl.: H04L 9/16

(54) **WIRELESS AUTHENTICATION TERMINAL**

(71) Applicant: Kabushiki Kaisha Toshiba, Minato-ku Tokyo 105-8001 (JP)
(72) Inventor: OBA Yoshihiro, Tokyo 105-8001 (JP); NISHIBAYASHI Yasuyuki, Tokyo 105-8001 (JP); KANDA Mitsuru, Tokyo 105-8001 (JP); SAITO Takeshi, Tokyo 105-8001 (JP)
(74) Representative: HOFFMANN EITLE
(86) International application number: PCT/JP2009/069914
(87) International publication number: WO 2011/064858

(57) **Abstract**

A wireless authentication terminal that connects to a network via a wireless base station, the wireless authentication terminal comprises a communication unit that performs communication compliant with IEEE802.15.4, an authentication processing unit that transmits and receives communication messages and performs authentication processing for connecting to a network, a filter processing unit that changes the communication messages allowed to pass through between the communication unit and the authentication processing unit, an encryption level determination unit that determines a level at which the communication unit encrypts the communication message, and a control unit that controls an operation state of the filter processing unit and the encryption level determination unit based on the phase of the authentication processing in the authentication processing unit.

## Description

### BACKGROUND OF THE INVENTION

### Field of the Invention

The present invention relates to a wireless authentication terminal.

### Related Art

Before starting communication on a wireless backbone network, a wireless terminal receives an authentication from the wireless backbone network, encrypts data using a key provided after the authentication, and performs communication (for example, refer to Japanese Patent Application Laid-Open No. 2009-153142).

In the IEEE802.15.4 standard that realizes a wireless PAN (Personal Area Network), although it is defined that an encryption key for encrypting communication messages is shared by each terminal in advance, a framework for dynamically setting or updating the encryption key is not defined. Therefore, when communication is continued for a long time using one and the same encryption key, there is a possibility that the encryption key is calculated by a third party and the encrypted communication message is analyzed.

PANA (Protocol for carrying Authentication for Network Access) is known as a standard for performing network access authentication on various communication media mounted on a terminal. In the PANA, a terminal that requests a network access authentication transmits and receives an authentication message encapsulated into an IP (Internet Protocol) packet, so that the authentication and dynamic key exchange are performed without changing each communication medium in access devices (base stations) on a route to an authentication server.

However, in a configuration in which the IEEE802.15.4 standard and the PANA standard are simply combined, there are problems that a wireless terminal having an IP address is illegally attacked and the wireless terminal transmits and receives unencrypted data messages during an authentication stage.

In ZigBee that defines functions in higher layers of the IEEE802.15.4 standard, a framework for dynamically setting or updating an encryption key is defined. However, the encryption key may be transmitted in a wireless communication path in a form of a plain text that is not encrypted, and thus there is a possibility that the encryption key is obtained by a third party. Therefore, it is desired that the encryption key is encrypted and the encryption key is transmitted through a highly reliable and secure communication path.

### SUMMARY OF THE INVENTION

The object of the present invention is to provide a wireless authentication terminal that can dynamically and securely set and update a shared key between the wireless authentication terminal and a wireless base station.

### Means for Solving the Problems

According to one aspect of the present invention, there is provided a wireless authentication terminal that connects to a network via a wireless base station, the wireless authentication terminal comprising:
a communication unit that performs communication compliant with IEEE802.15.4;
an authentication processing unit that transmits and receives communication messages and performs authentication processing for connecting to a network; a filter processing unit that changes the communication messages allowed to pass through between the communication unit and the authentication processing unit;
an encryption level determination unit that determines a level at which the communication unit encrypts the communication massage; and
a control unit that controls an operation state of the filter processing unit and the encryption level determination unit based on the phase of the authentication processing in the authentication processing unit.

According to the present invention, it is possible to dynamically and securely set and update a shared key between a wireless authentication terminal and a wireless base station.

### BRIEF DESCRIPTION OF THE DRAWINGS

Fig. 1 is a schematic configuration diagram of a network according to an embodiment of the present invention;
Fig. 2 is a schematic configuration diagram of a wireless authentication terminal according to the embodiment;
Fig. 3 is a flowchart for explaining an authentication procedure on a client side;
Fig. 4 is a flowchart for explaining an authentication procedure on an authentication agent side;
Fig. 5 is a flowchart for explaining a network disconnection procedure on the client side;
Fig. 6 is a flowchart for explaining a network disconnection procedure on the authentication agent side;
Fig. 7 is a flowchart for explaining an authentication procedure on a client side;
Fig. 8 is a flowchart for explaining an authentication procedure on an authentication agent side;
Fig. 9 is a flowchart for explaining a network disconnection procedure on the client side;
Fig. 10 is a flowchart for explaining a network disconnection procedure on the authentication agent side;
Fig. 11 is a diagram showing a format of a data frame of IEEE802.15.4;
Fig. 12 is a diagram showing a format of a PANA message; and
Fig. 13 is a diagram showing a format of a ZigBee APL frame.

### DETAILED DESCRIPTION OF THE INVENTION

Hereinafter, an embodiment of the present invention will be described with reference to the drawings.

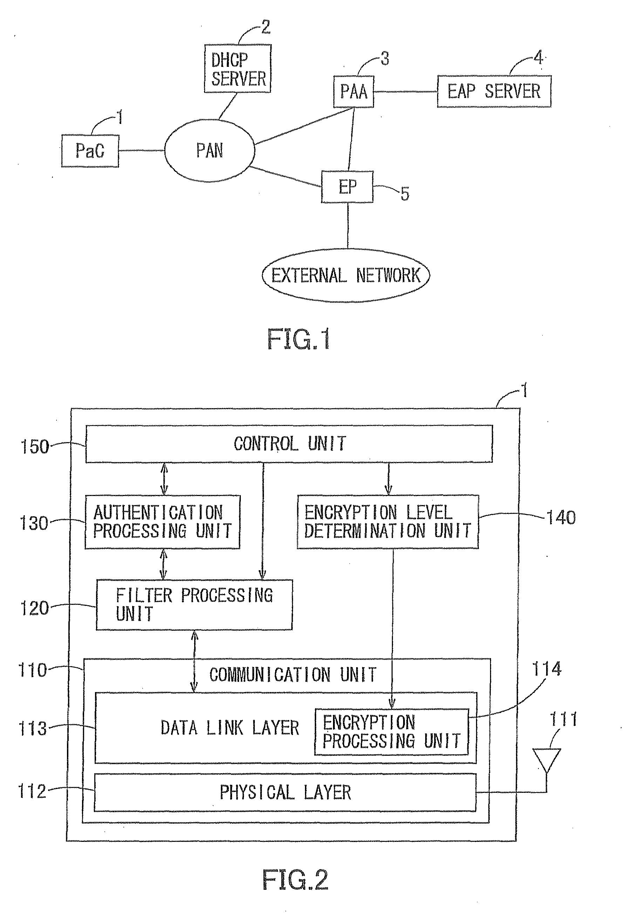

Fig. 1 shows a schematic configuration diagram of a network including a wireless authentication terminal according to the embodiment of the present invention. The network includes a PaC 1, a DHCP server 2, a PAA 3, an EAP server 4, and an EP 5.

The PaC 1 is a client (PANA Client) of a PANA (Protocol for carrying Authentication for Network Access). The PaC 1 corresponds to the wireless authentication terminal according to the embodiment. The DHCP (Dynamic Host Configuration Protocol) server 2 sets an IP address of the PaC 1.

The PAA 3 is a PANA authentication agent (PANA Authentication Agent). The EAP server 4 is an extensible authentication protocol (EAP: Extensible Authentication Protocol) server, and includes an authentication method.

The EP 5 is a functional element that performs an access control for each IP (Internet Protocol) packet with respect to a PaC 1 authenticated using the PANA. A device having a function of an EP (Enforcement Point) is, for example, a wireless base station such as a wireless LAN access point and an access router.

The PaC 1, the DHCP server 2, the PAA 3, and the EP 5 are connected to each other via a PAN (Personal Area Network) realized by the IEEE802.15.4 standard. These are an FFD (Full Functional Device) having full function of IEEE802.15.4 or an RFD (Reduced Functional Device) having reduced function of IEEE802.15.4.

The PAA 3 relays an EAP message between the PaC 1 and the EAP server 4. The PANA is used for transferring the EAP message between the PaC 1 and the EAP server 3. An AAA (Authentication, Authorization, and Accounting) protocol is used for transferring the EAP message between the PAA 3 and the EAP server 4.

The PAA 3 and the EP 5 may be one and the same device, the DHCP server 2 and the PAA 3 may be one and the same device, and the DHCP server 2 and the EP 5 may be one and the same device. The DHCP server 2, the PAA 3, and the EP 5 may be one and the same device. At this time, transferring information between these logic elements is performed locally in high speed and high reliability by using an API (Application Programming Interface) or the like. In addition, the EAP server 4 may be included in the one and the same device of the DHCP server 2, the PAA 3, and the EP 5. This is suitable when performing smart grid communication in a small scale network such as a home network, and installation is easy because the AAA protocol between the PAA 3 and the EAP server 4 is not necessary.

One PAA 3 may be a PAA for a plurality of PANs.

The PaC 1 may be installed on a smart meter device that functions as a server of ANSI C12.22 as well. In this case, the PAA 3 may be installed on a concentrator device that functions as a relay of ANSI C12.22 as well. The DHCP server 2 may transmit a correspondence relationship between a node identifier (ApTitle) and an IP address of a relay of ANSI C12.22 to the PaC 1 which is a smart meter device as setting information of the DHCP. Instead of the DHCP server 2, a DHCP Relay agent may be connected to a PAN realized by the IEEE802.15.4 standard. In this case, the DHCP server 2 is disposed outside the PAN and the PaC 1. communicates with the DHCP server 2 via a DHCP Relay.

The PaC 1 can be installed on HEMS (Home Energy Management Server).

Fig. 2 shows a schematic configuration of the PaC 1. The PaC 1 includes a communication unit 110, a filter processing unit 120, an authentication processing unit 130, an encryption level determination unit 140, and a control unit 150.

The communication unit 110 includes an antenna 111, a physical layer 112, and a data link layer 113, and performs communication according to a procedure of the IEEE802.15.4 standard. The data link layer 113 includes an encryption processing unit 114 that encrypts a communication message using a common key.

The filter processing unit 120 performs packet filtering of a communication message related to IP. The filter processing unit 120 changes messages that are allowed to pass through a route between the authentication processing unit 130 and the communication unit 110 based on an instruction from the control unit 150. For example, the filter processing unit 120 allows only ARP (Address Resolution Protocol) message, PANA message, DHCP message, and IPv6 Neighbor Discovery message to pass through before authentication, and allows all communication messages to pass through after completion of the authentication.

The authentication processing unit 130 performs authentication processing for a terminal (PaC 1) to connect to a network. For example, the authentication processing unit 130 starts PANA authentication for the PAA 3, and transmits/receives EAP message to/from the PAA 3. The authentication processing unit 130 transmits authentication stage information indicating whether the authentication is completed to the control unit 150. When the terminal is allowed to connect to the network and setting of an encryption key is completed in the communication unit 110, the authentication processing unit 130 determines that the authentication is completed, and when the terminal is not allowed to connect to the network and/or setting of an encryption key is not completed, the authentication processing unit 130 determines that the authentication is not completed.

The encryption level determination unit 140 determines an encryption level in the encryption processing unit 114, and transmits the encryption level to the encryption processing unit 114 based on the instruction of the control unit 150. In the procedure of the IEEE802.15.4 standard, a plurality of levels related to security and encryption are defined. For example, when the security level (encryption level) is the lowest, unencrypted data message can be transmitted and received, and when the security level is normal, only encrypted data message can be transmitted and received. In the normal level, the level is divided into further detailed levels according to the kind of encryption algorithm.

The control unit 150 instructs the filter processing unit 120 to change the messages allowed to pass through, and instructs the encryption level determination unit 140 to change the encryption level based on the authentication stage information transmitted from the authentication processing unit 130. For example, the control unit 150 instructs the filter processing unit 120 to allow only specified messages to pass through before authentication and allow all communication messages to pass through after completion of the authentication. The control unit 150 instructs the encryption level determination unit 140 to lower the encryption level to the lowest before completion of the authentication and set the encryption level to the normal level after completion of the authentication.

Next, operations of the PaC 1 and the PAA 3 when the PANA is run on a PAN realized by the IEEE802.15.4 standard will be described.

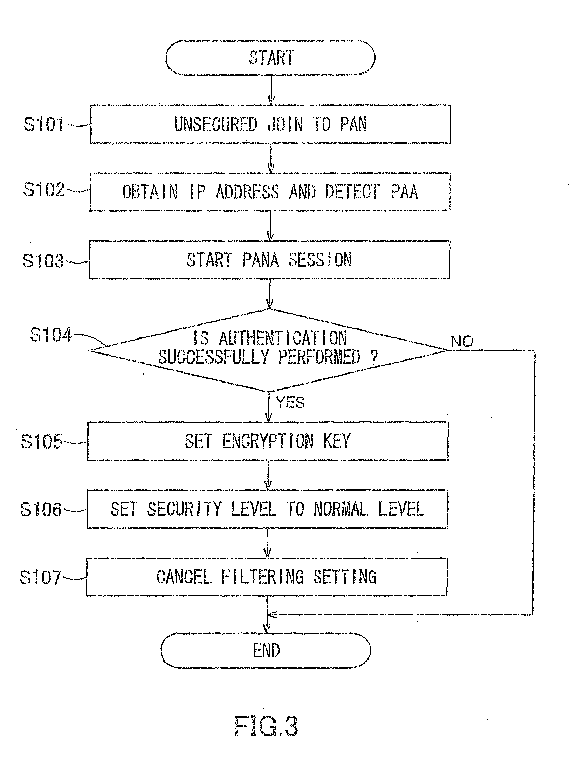

An authentication procedure in the PaC 1 will be described with reference to a flowchart shown in Fig. 3. When the PaC 1 is started (or restarted), the encryption level in the encryption processing unit 114 is set to the lowest level, and filtering is set in the filter processing unit 120 so that only ARP message, PANA message, DHCP message, and IPv6 Neighbor Discovery message are allowed to pass through.

(Step S101) The PaC 1 performs connection (unsecured join) to the PAN by using a method without encryption. Specifically, the PaC 1 does not encrypt a MAC layer, and performs an Association Request command on an FFD (DHCP server 2) on the other side of the connection.

(Step S102) The PaC 1 obtains an IP address from the DHCP server 2. A link-local address or the like can be used as the IP address. The PaC 1 performs detection of the PAA 3. The DHCP may be used to detect the PAA 3.

(Step S103) A PANA session is started. Specifically, the session is started when the PaC 1 (authentication processing unit 130) transmits a PANA-Client-Initiation message to the PAA 3 or receives a PANA-Auth-Request message in which an S flag is on from the PAA 3.

Only specified messages are allowed to pass through by the filtering setting of the filter processing unit 120.

(Step S104) It is determined whether the PANA authentication is successfully performed. If the PANA authentication is successfully performed, the process proceeds to step S105, and if the PANA authentication fails, the authentication processing ends.

(Step S105) An encryption key (shared key) between the PaC 1 and the EP 5 is set in the communication unit 110. A PEMK (Pac-EP-Master-Key) is used as the encryption key.

(Step S106) The encryption level (security level) in the encryption processing unit 114 is set to the normal level. Therefore, only encrypted data messages can be transmitted and received.

(Step S107) The filtering setting in the filter processing unit 120 is cancelled. As a result, all communication messages are allowed to pass through.

When the IP address used before the authentication and the IP address used after the authentication are different from each other, the PaC 1 can obtain an IP address again after the procedure shown in Fig. 3.

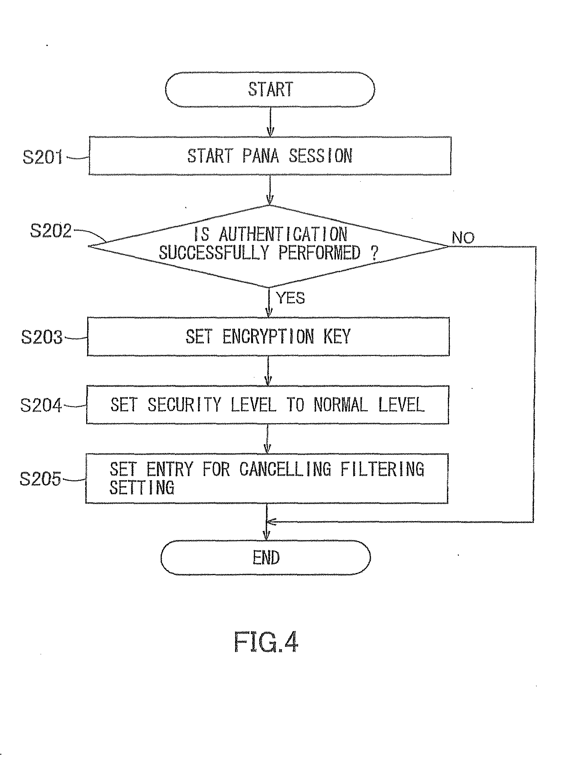

Next, an operation of the PAA 3 during the authentication processing of the PaC 1 will be described with reference to a flowchart shown in Fig. 4. When the PAA 3 is started (or restarted), the PAA 3 sets the security level of data frame of IEEE802.15.4 of the EP 5 to the lowest level, and performs filtering setting of the IP packet so that only ARP message, PANA message, DHCP message, and IPv6 Neighbor Discovery message are allowed to pass through.

(Step S201) The PANA session is started. Specifically, the session is started when the PAA 3 receives the PANA-Client-Initiation message from the PaC 1 or transmits the PANA-Auth-Request message in which an S flag is on to the PaC 1.

(Step S202) It is determined whether the PANA authentication is successfully performed. If the PANA authentication is successfully performed, the process proceeds to step S203, and if the PANA authentication fails, the authentication processing ends.

(Step S203) The PAA 3 sets an access control parameter into the EP 5 to notify that the PaC 1 is a terminal that can be connected to the network. The PAA 3 also sets an encryption key (shared key) between the PaC 1 and the EP 5. In this case, the PAA 3 uses the PEMK as the encryption key.

(Step S204) The PAA 3 sets the security level of data frame of IEEE802.15.4 of the EP 5 to the normal level.

(Step S205) The PAA 3 sets an entry for cancelling the filtering setting of the IP packet from the PaC 1 to the EP 5.

The PANA session established in this way is maintained while the access of the PaC 1 is approved, and the PaC 1 can transmit and receive data packets to and from the external network via the EP 5.

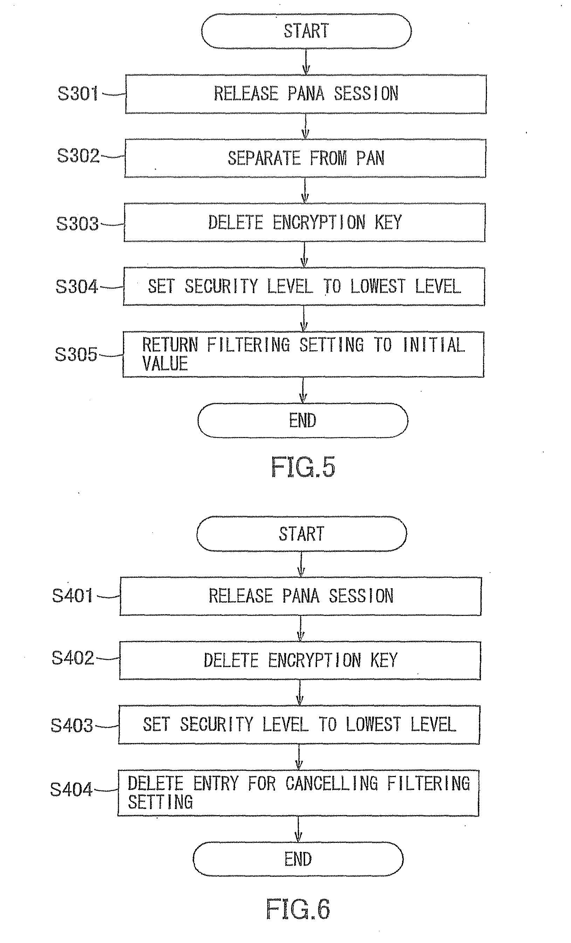

Next, a procedure for the PaC 1 to disconnect the connection to the PAN will be described with reference to a flowchart shown in Fig. 5.

(Step S301) The PaC 1 releases the PANA session.

(Step S302) The PaC 1 is separated from the PAN. Specifically, the PaC 1 executes a Disassociation command to the FFD of IEEE802.15.4 which is currently being connected to the PaC 1.

(Step S303) The encryption key between the PaC 1 and the EP 5 is deleted.

(Step S304) The encryption level (security level) in the encryption processing unit 114 is set to the lowest level.

(Step S305) The filtering setting in the filter processing unit 120 is returned to the initial value (a state in which only specified massages are allowed to pass through).

Next, an operation of the PAA 3 when the PaC 1 disconnects the connection to the PAN will be described with reference to a flowchart shown in Fig. 6.

(Step S401) The PANA session is released.

(Step S402) The PAA 3 deletes the encryption key between the PaC 1 and the EP 5. Also, the PAA 3 deletes the access control parameter that has been allowed for the PaC 1 from the EP 5.

(Step S403) The PAA 3 sets the security level of data frame from the PaC 1 to the EP 5 to the lowest level.

(Step S404) The PAA 3 deletes the entry for cancelling the filtering setting of the IP packet from the PaC 1 to the EP 5.

As described above, before the authentication, a packet filter is enabled so that only specified messages are passed through, and then unencrypted data messages are transmitted and received. After the authentication, a packet filter is disabled, and then only encrypted data messages are transmitted and received. It is possible to obtain security over an IEEE802.15.4 wireless authentication terminal (PaC 1) and dynamically and securely set and update a shared key (encryption key) in the data link layer between the PaC 1 and the EP 5 (wireless base station).

In this way, the wireless authentication terminal (PaC 1) according to this embodiment can dynamically and securely set and update the shared key between the wireless authentication terminal and the wireless base station. In addition, it is not necessary to change the specification of IEEE802.15.4 because the PANA is used as an EAP transport on a PAN of IEEE802.15.4. Further, since the framework of the key management of EAP is used, a conventional AAA infrastructure can be used to authenticate an IEEE802.15.4 terminal and information necessary to authenticate the terminal can be managed in an integrated fashion by a server in a core network.

In the above embodiment, although the filter processing unit 120 and the authentication processing unit 130 of the wireless authentication terminal (PaC 1) operate in the network layer, they may operate in the data link layer. When the authentication processing unit 130 transmits and receives an authentication message in the data link layer, the filter processing unit 120 prevents data message of the IEEE802.15.4 standard from passing through before the authentication and allows the data message to pass through after the authentication.

At this time, operations of the PaC 1 and the PAA 3 when the PANA is run on a PAN realized by the IEEE802.15.4 standard are the same as those of the flowcharts shown in Figs. 3 to 6. However, the obtaining of the IP address in step S102 can be omitted. When the PaC 1 supports IP, the PaC 1 can obtain an IP address after the authentication procedure is completed.

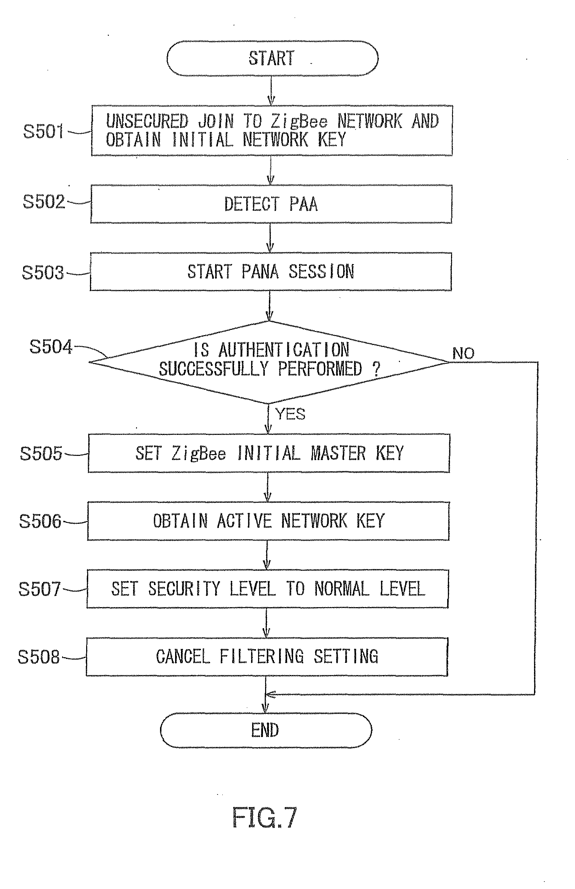

The PAN may be a ZigBee network. In this case, the EP 5 has a function of ZigBee Trust Center. An access control method in the ZigBee network will be described with reference to flowcharts shown in Figs. 7 to 10.

Fig. 7 is a flowchart for explaining an authentication procedure in the PaC 1. When the PaC 1 is started (or restarted), the security level of frame of APL (Application Layer) and NWL (Network Layer) is set to the lowest level, and filtering setting of the ZigBee APL frame is performed so that only L2 (Layer 2) PANA message is allowed to pass through.

(Step S501) The PaC 1 performs an unsecured join to the ZigBee network. Specifically, the PaC 1 executes an Association Request command to the FFD of IEEE802.15.4 which is on the other side of the connection without using encryption in the MAC layer. Thereafter, the PaC 1 detects a Trust Center of ZigBee and obtains an Initial network key from the Trust Center. To detect the Trust Center, ZigBee Device Discovery is used. In this case, it is assumed that a ZigBee router to which the PaC 1 is connected is a Primary Discovery Cache device. The Initial network key need not be securely transferred. This is because the PaC 1 can obtain an active network key in a secure method after the authentication is successfully performed and perform secured join to the ZigBee network by using the obtained active network key.

(Step S502) The PaC 1 detects the PAA 3.

(Step S503) The PANA session is started on the initiative of the PaC 1. Specifically, the PaC 1 transmits a PANA-Client-Initiation message to the PAA 3.

(Step S504) If the authentication is successfully performed, the process proceeds to step S505, and if the authentication fails, the processing ends.

(Step S505) A ZigBee initial master key between the PaC 1 and the EP 5 is set. At this time, the PEMK is used as the ZigBee initial master key.

(Step S506) The PaC 1 obtains an active network key from the EP 5 (ZigBee Trust Center). This operation is performed according to active network key obtaining means defined in the ZigBee.

(Step S507) The security level of the ZigBee APL and NWL frames is set to the normal level.

(Step S508) The filtering setting of the ZigBee APL frame is cancelled.

The PaC 1 can perform a secured join to the ZigBee network after the authentication procedure is completed.

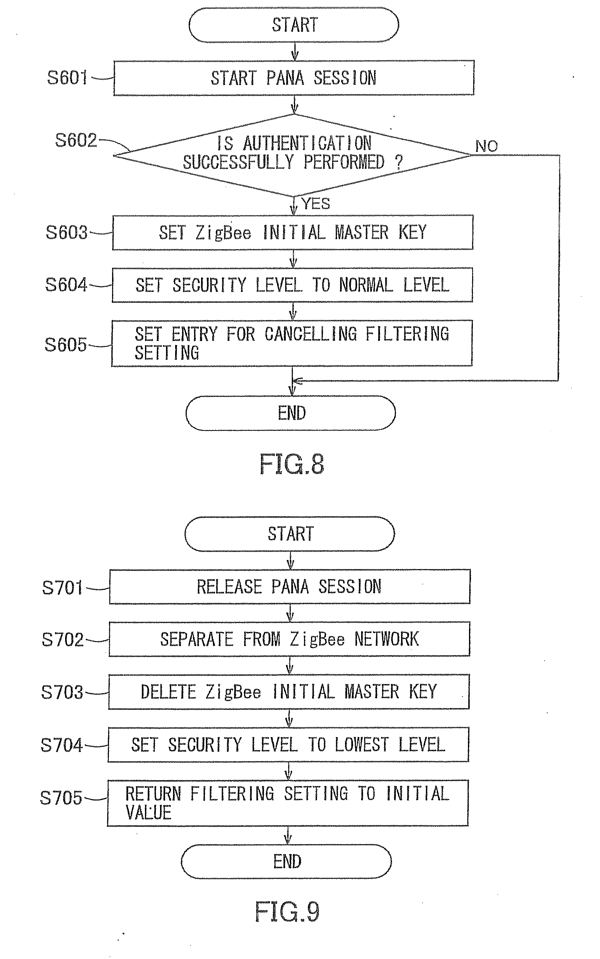

Next, an authentication procedure in the PAA 3 will be described with reference to a flowchart shown in Fig. 8.

(Step S601) The PAA 3 waits for a start of the PANA session that is started on the initiative of the PaC 1. When the PAA 3 receives the PANA-Client-Initiation message transmitted from the PaC 1, the session is started.

(Step S602) If the authentication is successfully performed, the process proceeds to step S603, and if the authentication fails, the processing ends.

(Step S603) The PAA 3 sets the ZigBee initial master key between the PaC 1 and the EP 5. The PAA 3 uses the PEMK as the ZigBee initial master key.

(Step S604) The PAA 3 sets the security level of the ZigBee APL and NWL frames of the EP 5 to the normal level.

(Step S605) The PAA 3 sets an entry for cancelling the filtering setting of the ZigBee APL frame from the PaC 1 to the EP 5.

In this way, by transferring a PDU (protocol data unit) of the PANA through the data link layer on the ZigBee network, the network access authentication and the key management framework of the EAP can be used on the ZigBee network, so that it is possible to dynamically and securely set and update the initial master key without changing the specification of the ZigBee.

Next, a procedure for the PaC 1 to disconnect the connection to the ZigBee network will be described with reference to a flowchart shown in Fig. 9.

(Step S701) The PaC 1 releases the PANA session.

(Step S702) The PaC 1 is separated from the ZigBee network. Specifically, the PaC 1 executes an Mgmt_Leave command to the ZigBee router to which the PaC 1 is currently being connected.

(Step S703) The ZigBee initial master key between the PaC 1 and the EP 5 is deleted.

(Step S704) The security level of the ZigBee APL and NWL frames is set to the lowest level.

(Step S705) The filtering setting of the ZigBee APL frame is returned to the initial value.

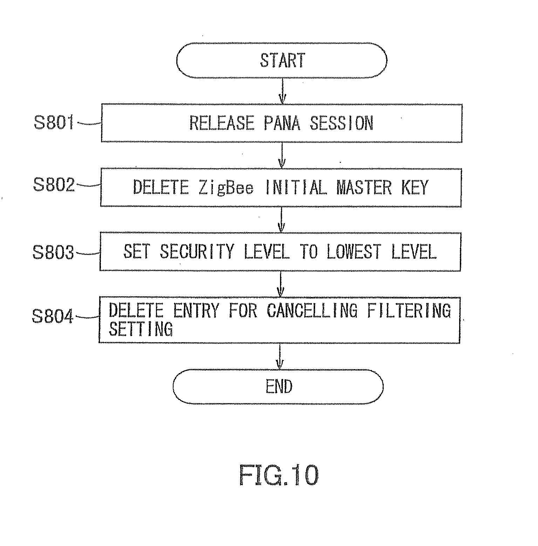

Next, an operation of the PAA 3 when the PaC 1 disconnects the connection to the ZigBee network will be described with reference to a flowchart shown in Fig. 10.

(Step S801) The PANA session is released.

(Step S802) The PAA 3 deletes the ZigBee initial master key between the PaC 1 and the EP 5.

(Step S803) The PAA 3 sets the security level of the ZigBee APL and NWL frames from the PaC 1 to the EP 5 to the lowest level.

(Step S804) The PAA 3 deletes the entry for cancelling the filtering setting of the ZigBee APL frame from the PaC 1 to the EP 5.

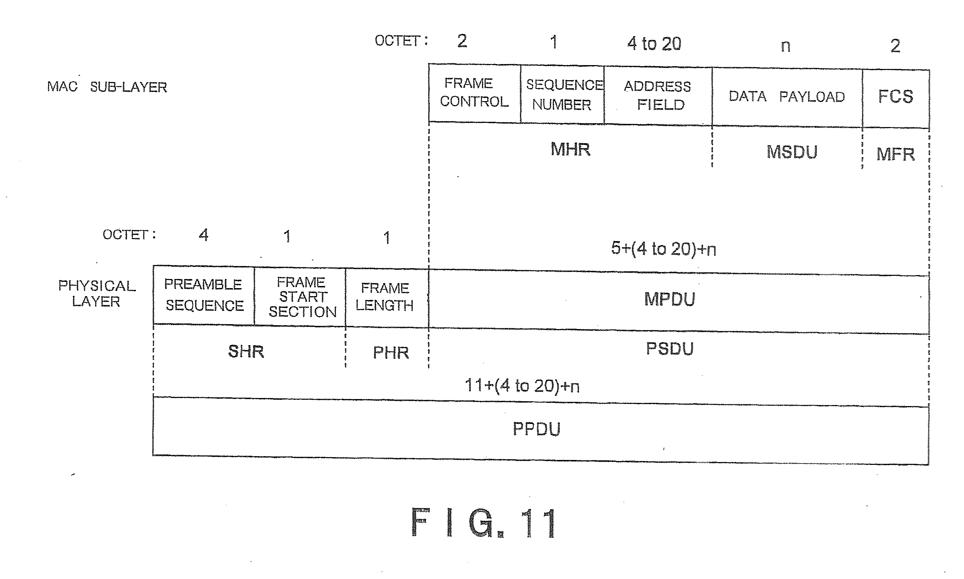

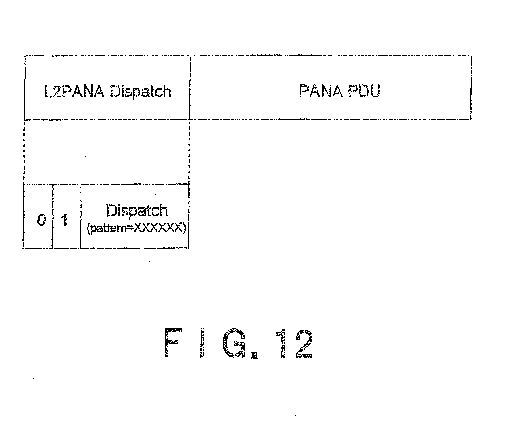

Fig. 11 shows a data frame format of IEEE802.15.4. When an authentication message is transmitted and received through the network layer, an IPv6 message encoded for LOWPAN (low power PAN) is in MSDU. On the other hand, when an authentication message is transmitted and received through the data link layer, an IPv6 message encapsulated for LOWPAN (low power PAN) is contained in MSDU. The format at this time is shown in Fig. 12. In Fig. 12, the first two bits of the Dispatch header are "01", which is a fixed value, and the other six bits contain an identifier for identifying L2PANA as a Dispatch pattern.

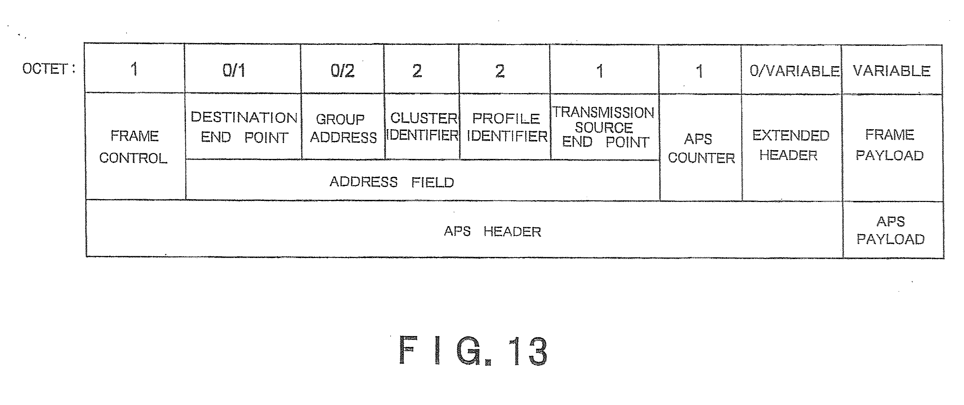

Fig. 13 shows a format of a ZigBee APL frame. The ZigBee APL frame is a frame in the ZigBee application layer. The APS payload portion of the ZigBee APL frame contains the PANA PDU. When the ZigBee APL frame is L2PANA APS, the profile identifier contains an identifier for identifying the L2PANA.

When an authentication message is transmitted and received through the data link layer, the L2PANA itself has a detection function of the PAA 3. This is realized when the PaC 1 broadcasts a L2PANA dispatch frame including a PANA-Client-Initiation (PCI) message and the PAA that receives the PCI unicasts a PANA-Auth-Request (PAR) message to the PaC 1. At this time, the PaC 1 sets the MAC address of the PAA 3 to the source MAC address of the received PAR. If a plurality of PAAs respond to the PaC 1, the PaC 1 continues communication with one of the PAAs.

The present invention is not limited to the above embodiment as it is, and the invention can be embodied with its constituent elements modified in an implementation phase without departing from the scope of the invention. Further, various inventions can be formed by appropriate combinations of a plurality of constituent elements disclosed in the above embodiment. For example, some constituent elements may be deleted from all the constituent elements shown in the embodiment. Furthermore, the constituent elements over different embodiments may be appropriately combined.

The present invention has industrial applicability in a field where it is desired that a shared key is dynamically and securely set and updated between a wireless terminal and a wireless base station, for example, in a field of smart grid communication.

## Claims

1. A wireless authentication terminal that connects to a network via a wireless base station, the wireless authentication terminal comprising:
a communication unit that performs communication compliant with IEEE802.15.4;
an authentication processing unit that transmits and receives communication messages and performs authentication processing for connecting to a network;
a filter processing unit that changes the communication messages allowed to pass through between the communication unit and the authentication processing unit;
an encryption level determination unit that determines a level at which the communication unit encrypts the communication message; and
a control unit that controls an operation state of the filter processing unit and the encryption level determination unit based on the phase of the authentication processing in the authentication processing unit.

2. The wireless authentication terminal according to claim 1, wherein
when the authentication processing is not completed, the control unit controls the filter processing unit to allow only predetermined communication messages to pass through and controls the encryption level determination unit not to encrypt communication messages, and
when the authentication processing is completed, the control unit controls the filter processing unit to allow all communication messages to pass through and controls the encryption level determination unit to encrypt communication messages.

3. The wireless authentication terminal according to claim 2, wherein
when a network connection is allowed and setting of an encryption key in the communication unit is completed, the authentication processing unit determines that the authentication processing is completed, and
when a network connection is not allowed and/or setting of an encryption key in the communication unit is not completed, the authentication processing unit determines that the authentication processing is not completed.

4. The wireless authentication terminal according to claim 3, wherein
when the encryption level determination unit is controlled not to encrypt communication messages by the control unit, the encryption level determination unit determines an IEEE802.15.4 security level to be the lowest level, and
when the encryption level determination unit is controlled to encrypt communication messages by the control unit, the encryption level determination unit determines the IEEE802.15.4 security level in the communication unit to be a level higher than the lowest level.

5. The wireless authentication terminal according to claim 4, wherein
when the authentication processing unit transmits and receives an authentication message through a network layer, the filter processing unit controls approval/disapproval of passing through of an IP data packet, and
when the authentication processing unit transmits and receives an authentication message through a data link layer, the filter processing unit controls approval/disapproval of passing through of an IEEE802.15.4 data message.
